# EUROPEAN PATENT SPECIFICATION

(11) **EP 1 477 307 B1**
(45) Date of publication and mention of the grant of the patent: **15.08.2007**
(21) Application number: 04007492.4
(22) Date of filing: 27.03.2004
(51) Int. Cl.: B32B 37/22

(54) **Laminating machine**
Kaschiermaschine
Dispositif de lamination

(30) Priority: 14.05.2003 JP 2003135278
(43) Date of publication of application: 17.11.2004
(73) Proprietor: Fujipla Inc., Tokyo 104-0061 (JP)
(72) Inventor: Kubota, Takashi, 195-0062 Tokyo (JP)
(74) Representative: Schwarz, Thomas

(56) References cited:
- EP-A- 0 261 246
- US-A- 4 909 890
- PATENT ABSTRACTS OF JAPAN vol. 017, no. 679 (M-1527), 14 December 1993 (1993-12-14) & JP 05 229001 A (CANON APTECS KK; others: 01), 7 September 1993 (1993-09-07)

## Description

### BACKGROUND ART

This invention relates to an improvement applicable to a laminating machine which is employable for sticking a transparent film or films made of a thermoplastic resin on respectively either one surface or both surfaces of a sheet of paper which is usually called either a work sheet or an output sheet. More specifically this invention relates to an improvement applicable to a transparent film loading mechanism of the foregoing laminating machine, the transparent film loading mechanism being a mechanism with which the pair of heating rolls of the foregoing laminating machine is manually loaded with a transparent film or films made of a thermoplastic resin, prior to commencement of a process to stick the transparent film or films on the sheet of paper.

EP 0 261 246 A1 discloses a laminating method and device for laminating a first film to a second film by thermocompression bonding using a nipping roll unit comprising a heat roll and a pressure roll. The first film is guided onto the heat roll via an automatic feed angle adjusting roll for adjusting the distance of contact of the first film with the heat roll while the second film is guided onto the pressure roll to obtain a laminate film which is released by passing a discharge angle adjusting roll.

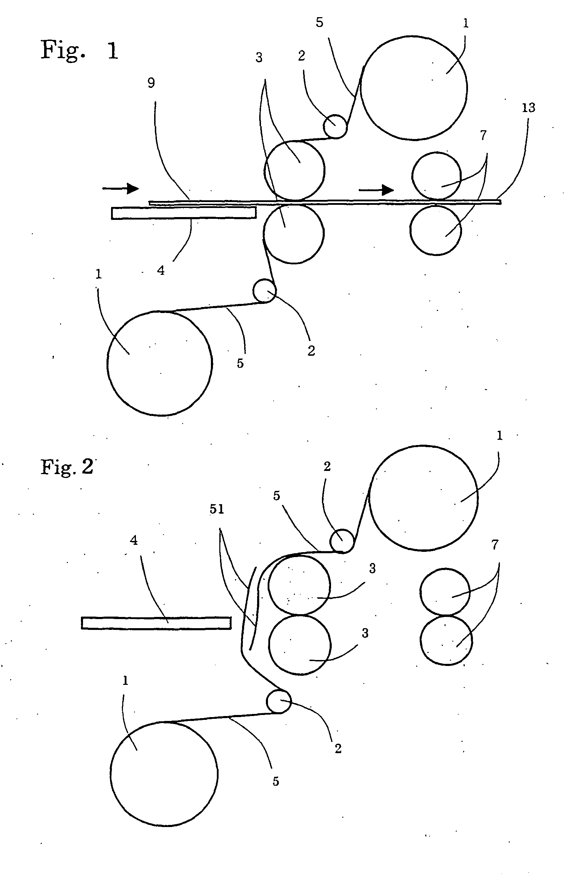

Referring to Fig. 1, a laminating machine produced by the applicant will be described below. The laminating machine is provided with a pair of heating rolls (3) for heating and pressing one or two transparent films (5) made of a thermoplastic resin respectively on one or both surfaces of a sheet of paper (9), one or two film feeder rolls (1) for feeding the transparent film (5), one or two film guide rolls (2) for guiding the transparent film (5), and a pair of pull out rolls (7) for discharging a product lamination (13) which actually is a lamination consisting of a sheet of paper (9) on one or both surfaces of which respectively one or two transparent films (5) are stuck.

Preferably, the laminating machine is further provided with a paper guide plate (4) which supports the sheet of paper (9), before the sheet of paper (9) is fed between the pair of heating rolls (3).

The foregoing laminating machine is involved with drawbacks described below. Referring to Fig. 2, prior to commencement of a lamination work, the front ends (51) of the transparent film (5) is required to be inserted in a gap between the heating rolls (3). During the insertion work, the front end or ends (51) of the transparent film (5) must be guided to pass through a small space between the guide roll (2) and the heating roll (3). Since the space is narrow and the temperature thereof is high e.g. over 100 degrees C, the insertion work conducted in the space is difficult and dangerous. In addition, in the case where the paper guide plate (4) is employed, the paper guide plate (4) itself readily disturbs the insertion work.

Various efforts were used to remove the foregoing drawbacks.

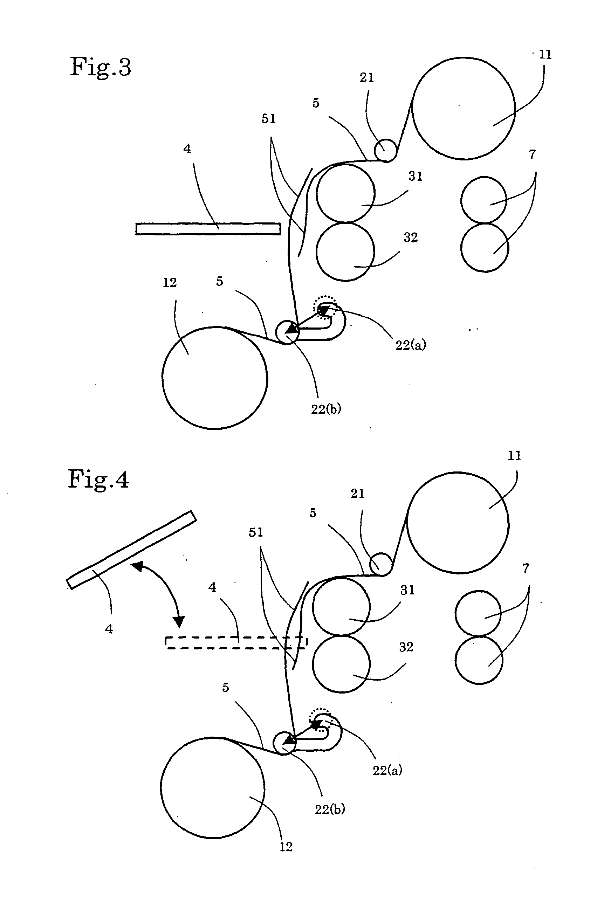

An example of the efforts is shown in Fig. 3 which shows that the under guide roll (22) is made movable between a first position (a) which is shown in a dotted line and a second position (b) which is shown in a full line, resultantly widening the space through which the front end (51) of the transparent film (5) must pass during the insertion work, thereby the insertion work is made easy and safe.

The other example of the efforts is shown in Fig. 4 which shows that the paper guide plate (4) is made movable upward between a position shown in a full line and a position shown in a broken line, resultantly widening the space in front of the pair of heating rolls (3), thereby the insertion work is made easy and safe.

Unfortunately, however, the first example still leaves a drawback wherein the lateral positioning of the transparent film (5) is difficult, thereby the accuracy of the product lamination (13) is still insufficient, and the second example still leaves a drawback caused by the rather large length of the paper guide plate (4) itself.

### DISCLOSURE OF THE INVENTION

Accordingly, the object of this invention is to provide a laminating machine employable for sticking a transparent film or films made of a thermoplastic resin on respectively either one surface or both surfaces of a sheet of paper, the laminating machine being free from the foregoing drawbacks, thereby the operability and the safety of the work to insert a transparent film or films between heating and pressing rolls are improved:

The first aspect of this invention is defined as a laminating machine provided with a pair of heating rolls (31, 32) for heating and pressing a transparent film (5) made of a thermoplastic resin on a surface of a sheet of paper (9), an upper film feeder roll (11) for feeding the transparent film (5) and an upper film guide roll (21) for guiding the transparent film (5), further provided with an upper guide roll supporter (6a) consisting of a pair of upper guide roll supporter flange (61) which supports the upper film guide roll (21) to allow the upper film guide roll (21) to move between a first position adjacent to the upper heating roll (31) and a second position remote from the upper heating roll (31) and which is rotatably supported by the axis of the upper film feeder roll (11), whereby the upper film guide roll (21) is movable between the first position adjacent to the upper heating roll (31) and the second position remote from the upper heating roll (31).

One example of the upper guide roll supporter (6a) consists of a pair of flanges (61) which is rotatably supported by the inner axis (61c) of a double axis (61a), of which the outer axis (61b) rotatably supports the upper film feeder roll (11), and the foregoing pair of flanges (61) supports the upper film guide roll (21) to allow the upper film guide roll (21) to move between a first position adjacent to the upper heating roll (31) and a second position remote from the upper heating roll (31).

The second aspect of this invention is defined as the first aspect of this invention, further provided with a lower film feeder roll (12) for feeding the transparent film (5) and a lower film guide roll (22) for guiding the transparent film (5) both of which are supported by a lower guide roll supporter (6b) consisting of a pair of lower guide roll supporter flange rotatably supported by the axis of the lower film feeder roll (12), and the lower guide roll supporter (6b) supports a paper guide plate (4), whereby the lower film guide roll (22) and the paper guide plate (4) are movable between a third position adjacent and the lower heating roll (32) and the fourth position remote from the lower heating roll (32).

The structure of the lower guide roll supporter (6b) is quite similar to that of the upper guide roll supporter (6a). Namely, one example of the lower guide roll supporter (6b) is a structure consisting of a pair of flanges (61) which is rotatably supported by the inner axis of a double axis supporting the lower film feeder roll (12), of which the outer axis rotatably supports the lower film feeder roll (12), and the foregoing pair of flanges (61) supports the lower film guide roll (22) to allow the lower film guide roll (22) to move between a third position adjacent to the lower heating roll (32) and a fourth position remote from the lower heating roll (32).

### BRIEF DESCRIPTION OF THE DRAWINGS

Fig. 1 is a side view of a laminating machine produced by the applicant,
Fig. 2 is a side view of the laminating machine of Fig. 1 shown in the position where the front end of the transparent film is being inserted,
Fig. 3 is a side view of a first example of an improved laminating machine,
Fig. 4 is a side view of a second example of an improved laminating machine,
Fig. 5 is a side view of a laminating machine in accordance with the first embodiment (the second aspect) of this invention (shown in the position under operation of lamination),
Fig. 6 is a perspective view of the upper guide roll supporter,
Fig. 7 is a side view of a laminating machine in accordance with the first embodiment (the second aspect) of this invention (shown in the position where the front end of the transparent film is being inserted), and
Fig. 8 is a side view of a laminating machine in accordance with the second embodiment (the first aspect) of this invention (shown in the position under operation of lamination).

### BEST MODES IMPLEMENTING THIS INVENTION

### FIRST EMBODIMENT

An embodiment wherein a transparent film (5) made of a thermoplastic resin is stuck on both surfaces of a sheet of paper (9).

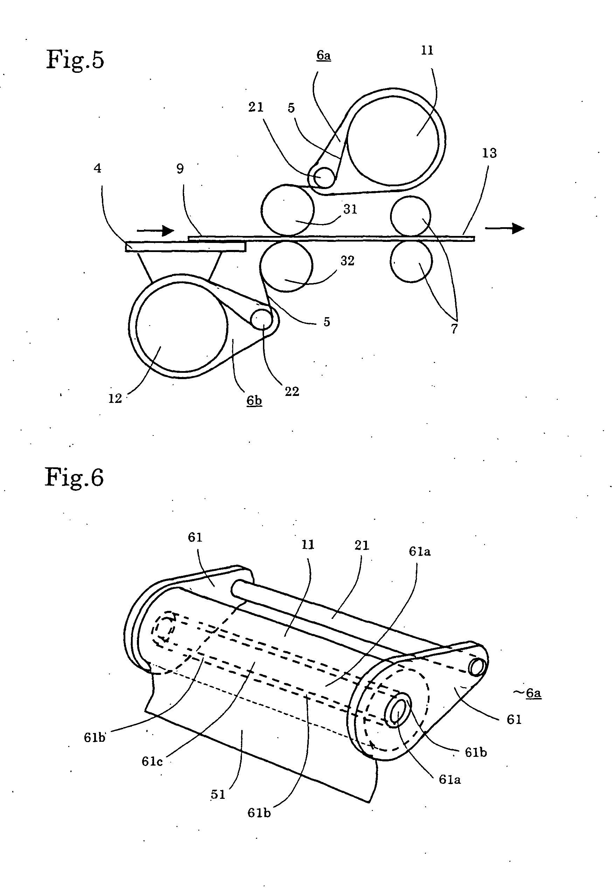

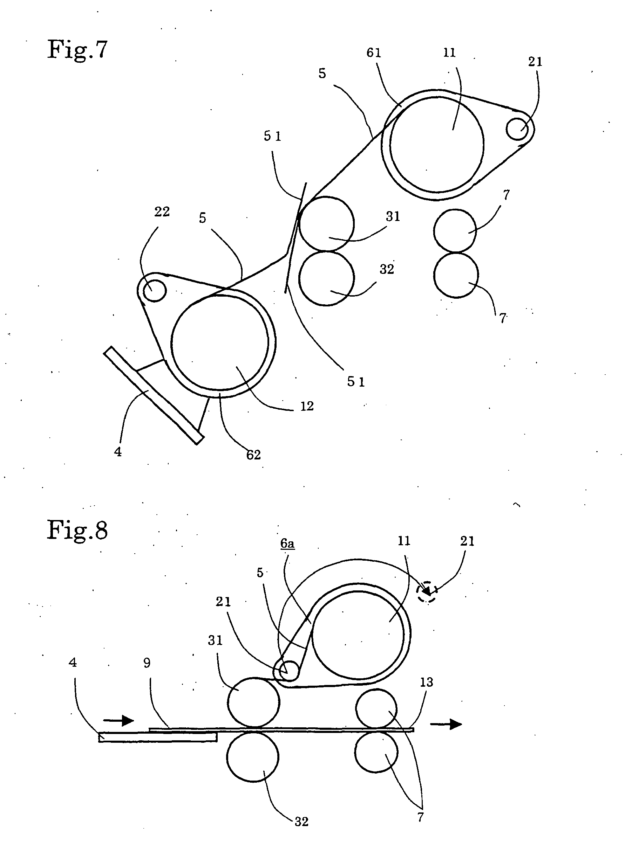

Referring to Fig. 5, the basic configuration of a laminating machine in accordance with the first embodiment of this invention is practically identical to that of Fig. 1. Namely, it is a combination of a pair of heating rolls (31, 32) for heating and pressing a transparent film (5) made of a thermoplastic resin on the both surfaces of a sheet of paper (9) which is supplied into a gap between the pair of heating rolls (31, 32), an upper film feeder roll (11) and a lower film feeder roll (12) for respectively storing the transparent film (5) and feeding the transparent film (5) toward a gap between the pair of heating rolls (31, 32), an upper film guide roll (21) and a lower film guide roll (22) and a pair of pull out rolls (7) for discharging a product lamination (13). The improvement applied to the foregoing basic configuration is introduction of an upper guide roll supporter (6a) and a lower guide roll supporter (6b). The upper guide roll supporter (6a) is rotatably supported by the axis of the upper film feeder roll (11) and supports the upper film guide roll (21) (See Fig. 7 as well.). Thus, the upper film guide roll (21) is allowed to move between a first position adjacent to the upper heating roll (31) which is shown in Fig. 5 and a second position remote from the upper heating roll (31) which is shown in Fig. 7. As a result, when the upper guide roll supporter (6a) is in a position where the upper film guide roll (21) is in the second position remote from the upper heating roll (31) as shown in Fig. 7, a wide space is available for the insertion work (See Fig. 7), resultantly enabling improvement of the safety and operability of the work to insert a transparent film or films between heating and pressing rolls. On the other hand, the lower guide roll supporter (6b) is rotatably supported by the axis of the lower film feeder roll (12) and supports the lower film guide roll (22) (See Fig. 7 as well.). Thus, the lower film guide roll (22) is allowed to move between a third position adjacent to the lower heating roll (32) which is shown in Fig. 5 and a fourth position remote from the lower heating roll (32) which is shown in Fig. 7. As a result, when the lower guide roll supporter (6b) is in a position where the lower film guide roll (22) is in the fourth position remote from the lower heating roll (32) as shown in Fig. 7, a wide space is available for the insertion work (See Fig. 7). In addition, the lower guide roll supporter (6b) supports the paper guide plate (4). Thus, though the lower guide roll supporter (6b) is allowed to fulfill its function in the position shown in Fig. 5, when the lower guide roll supporter (6b) has been rotated to the position shown in Fig. 7, the paper guide plate (4) is not in a position where it disturbs the work to insert the front end of the transparent film (5) toward the gap between the pair of heating rolls (31, 32). As a result, a wide space is available for the insertion work (See Fig. 7), resultantly enabling improvement of the safety and operability of the work to insert a transparent film or films between heating and pressing rolls.

The upper and lower guide roll supporters (6a, 6b) can be realized with various types of structure. Referring to Fig.6, one example of the upper guide roll supporter (6a) will be described below. A pair of flanges (61) is rotatably supported by the inner axis (61c) of a double axis (61a), of which the outer axis (61b) rotatably supports the upper film feeder roll (11). The pair of flanges (61) further supports the upper film guide roll (21) to allow the upper film guide roll (21) to move between a first position adjacent to the upper heating roll (31) as shown in Fig. 5 and a second position remote from the upper heating roll (31) as shown in Fig. 7.

As is already clear from the foregoing description, when the front end of the transparent film (5) is inserted into the gap between the pair of heating rolls (31, 32), the upper guide roll supporter (6a) and the lower guide roll supporter (6b) are kept in the positions shown in Fig. 7, resultantly widening the space between the upper heating roll (31) and the upper film feeder roll (11) and the space between the lower heating roll (32) and the lower film feeder roll (12), eventually improving the safety and operability of the work to insert a transparent film or films between heating and pressing rolls. Under normal operation of a lamination process, the upper guide roll supporter (6a) and the lower guide roll supporter (6b) are kept in the positions shown in Fig. 5.

Referring to Fig. 5 again, a sheet of paper (9) is fed in the gap between the pair of heating rolls (31, 32) to produce a product lamination (13) which is a lamination consisting of a sheet of paper (9) on the both surfaces of which one each of the transparent films (5) is stuck. The product lamination (13) is discharged in the direction of an arrow through the pair of pull out rolls (7).

### SECOND EMBODIMENT

An embodiment wherein a transparent film (5) made of a thermoplastic resin is stuck on one surface alone of a sheet of paper (9).

Referring to Fig. 8, the configuration of a laminating machine in accordance with the second embodiment of this invention is entirely identical to that of the first embodiment of this invention, excepting the lower guide roll supporter (6b) is excluded. The function and the results are identical to those of the first embodiment of this invention insofar as those realized by the combination the pair of heating rolls (31, 32), the upper film feeder roll (11) and the upper film guide roll (21) which are supported by the upper guide roll supporter (6a), are concerned. The paper guide plate (4) and the pair of pull out rolls (7) for discharging a product lamination (13) are identical to those shown in Fig. 1.

The above description has clarified that this invention has successfully provided a laminating machine, wherein the operability and the safety in the operation for insertion of a transparent film between the pair of heating rolls is considerably improved.

## Claims

1. A laminating machine comprising:
a pair of heating rolls (31, 32) for heating and pressing a transparent film (5) made of a thermoplastic resin on a surface of a sheet of paper (9) and
an upper film feeder roll (11) for feeding said transparent film (5),
an upper film guide roll (21) for guiding said transparent film (5), **characterized by**:
an upper guide roll supporter (6a) rotatably supported by the axis of said upper film feeder roll (11) and supporting said upper film guide roll (21), whereby
said upper film guide roll (21) is movable between a first position adjacent to said upper heating roll (31) and a second position remote from said upper heating roll (31).

2. A laminating machine according to claim 1, wherein said upper guide roll supporter (6a) comprises a pair of flanges (61) which are rotatably supported by the inner axis (61c) of a double axis (61a) of said upper film feeder roll (11), said pair of flanges (61) supporting said upper film guide roll (21).

3. A laminating machine according to claim 1:
further comprising:
a lower film feeder roll (12) for feeding said transparent film (5) and a lower film guide roll (22) for guiding said transparent film (5) both of which are supported by a lower guide roll supporter (6b) rotatably supported by the axis of said lower film feeder roll (12), said lower guide roll supporter (6b) supporting said lower film guide roll (22) and
a paper guide plate (4), whereby said lower film guide roll (22) and said paper guide plate (4) are movable between a third position adjacent to said lower heating roll (32) and a fourth position remote from said lower heating roll (32).

4. A laminating machine according to claim 3, wherein said lower guide roll supporter (6b) comprises a pair of flanges (61) which are rotatably supported by the inner axis (61c) of a double axis (61a) of said upper film feeder roll (11), said pair of flanges (61) supporting said upper film guide roll (21).

## Patentansprüche

1. Laminiermaschine mit:
einem Paar von Heizwalzen (31, 32) zum Heizen und Pressen eines transparenten Films (5), der aus einem thermoplastischen Harz besteht, auf eine Oberfläche
eines Blatts Papier (9) und
einer oberen Filmzuführungswalze (11) zum Zuführen des transparenten Films (5),
einer oberen Filmführungswalze (21) zum Führen des transparenten Films (5), **gekennzeichnet durch**:
einen oberen Führungswalzenträger (6a), der **durch** die Achse der oberen Filmzuführungswalze (11) drehbar gelagert ist und die obere Filmführungswalze (21) abstützt, wobei
die obere Filmführungswalze (21) zwischen einer zur oberen Heizwalze (31) benachbarten ersten Position und einer von der oberen Heizwalze (31) entfernten zweiten Position beweglich ist.

2. Laminiermaschine nach Anspruch 1, wobei der obere Führungswalzenträger (6a) ein Paar von Flanschen (61) umfasst, die durch die innere Achse (61c) einer Doppelachse (61a) der oberen Filmzuführungswalze (11) drehbar abgestützt sind, wobei das Paar von Flanschen (61) die obere Filmführungswalze (21) abstützt.

3. Laminiermaschine nach Anspruch 1:
welche ferner umfasst:
eine untere Filmzuführungswalze (12) zum Zuführen des transparenten Films (5) und eine untere Filmführungswalze (22) zum Führen des transparenten Films (5), die beide durch einen unteren Führungswalzenträger (6b) abgestützt sind, der durch die Achse der unteren Filmzuführungswalze (12) drehbar abgestützt ist, wobei der untere Führungswalzenträger (6b) die untere Filmführungswalze (22) und eine Papierführungsplatte (4) abstützt, wobei die untere Filmführungswalze (22) und die Papierführungsplatte (4) zwischen einer zur unteren Heizwalze (32) benachbarten dritten Position und einer von der unteren Heizwalze (32) entfernten vierten Position beweglich sind.

4. Laminiermaschine nach Anspruch 3, wobei der untere Führungswalzenträger (6b) ein Paar von Flanschen (61) umfasst, die durch die innere Achse (61c) einer Doppelachse (61a) der oberen Filmzuführungswalze (11) drehbar abgestützt sind, wobei das Paar von Flanschen (61) die obere Filmführungswalze (21) abstützt.

## Revendications

1. Dispositif de lamination comprenant :
une paire de rouleaux chauffants (31, 32) pour chauffer et presser un film transparent (5) en résine thermoplastique sur une surface d'une feuille de papier (9), et
un rouleau distributeur de film supérieur (11) pour faire avancer le dit film transparent (5),
un rouleau de guidage de film supérieur (21) pour guider le dit film transparent (5),
**caractérisé par**
un support de rouleau de guidage supérieur (6a) supporté de façon tournante par l'axe du dit rouleau distributeur de film supérieur (11) et supportant le dit rouleau de guidage de film supérieur (21), de sorte que le dit rouleau de guidage de film supérieur (21) est déplaçable entre une première position adjacente au dit rouleau chauffant supérieur (31) et une deuxième position éloignée du dit rouleau chauffant supérieur (31).

2. Dispositif de lamination selon la revendication 1, dans lequel le dit support de rouleau de guidage supérieur (6a) comprend deux brides (61) qui sont supportées de façon tournante par l'axe intérieur (61c) d'un axe double (61a) du dit rouleau distributeur de film supérieur (11), les dites deux brides (61) supportant le dit rouleau de guidage de film supérieur (21).

3. Dispositif de lamination selon la revendication 1, comprenant en outre :
un rouleau distributeur de film inférieur (12) pour distribuer le dit film transparent (5) et un rouleau de guidage de film inférieur (22) pour guider le dit film transparent (5), qui sont tous deux supportés par un support de rouleau de guidage inférieur (6b) supporté de façon tournante par l'axe du dit rouleau distributeur de film inférieur (12), le dit support de rouleau de guidage inférieur (6b) supportant le dit rouleau de guidage de film inférieur (22) et une plaque de guidage de papier (4), de sorte que le dit rouleau de guidage de film inférieur (22) et la dite plaque de guidage de papier (4) sont déplaçables entre une troisième position adjacente au dit rouleau chauffant inférieur (32) et une quatrième position distante du dit rouleau chauffant inférieur (32).

4. Dispositif de lamination selon la revendication 3, dans lequel le dit support de rouleau de guidage inférieur (6b) comprend deux brides (61) qui sont supportées de façon tournante par l'axe intérieur (61c) d'un axe double (61a) du dit rouleau distributeur de film supérieur (11), les dites deux brides (61) supportant le dit rouleau de guidage de film supérieur (21).
